(19) Europäisches Patentamt
European Patent Office
Office européen des brevets

(11) **EP 4 177 233 A1**

(12) **DEMANDE DE BREVET EUROPEEN**

(43) Date de publication:
**10.05.2023 Bulletin 2023/19**

(21) Numéro de dépôt: **22206021.2**

(22) Date de dépôt: **08.11.2022**

(51) Classification Internationale des Brevets (IPC):
**C04B 35/26** (2006.01)    **C04B 35/626** (2006.01)
**C04B 35/64** (2006.01)    **G02F 1/09** (2006.01)
**H01F 1/34** (2006.01)    **H01P 1/218** (2006.01)
**C01G 49/00** (2006.01)

(52) Classification Coopérative des Brevets (CPC):
**C04B 35/2675; C01G 49/0054; C04B 35/2633;**
**C04B 35/2641; C04B 35/6261; C04B 35/6262;**
**C04B 35/62645; C04B 35/64; H01F 1/346;**
C04B 2235/3203; C04B 2235/3224;
C04B 2235/3225; C04B 2235/3281;
C04B 2235/3293; C04B 2235/3298;    (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **09.11.2021 FR 2111861**

(71) Demandeur: **THALES**
**92400 Courbevoie (FR)**

(72) Inventeurs:
• **QASSYM, Lilia**
  **91767 PALAISEAU (FR)**
• **LEBOURGEOIS, Richard**
  **91767 PALAISEAU (FR)**

(74) Mandataire: **Atout PI Laplace**
**Immeuble "Visium"**
**22, avenue Aristide Briand**
**94117 Arcueil Cedex (FR)**

(54) **MATÉRIAU FERRITE DE STRUCTURE GRENAT À BASSE TEMPÉRATURE DE FRITTAGE ET HAUTE AIMANTATION À SATURATION POUR COFRITTAGE AVEC UNE MÉTALLISATION ARGENT OU OR ET PROCÉDÉ DE FABRICATION DU MATÉRIAU FERRITE**

(57) L'invention a pour objet un matériau ferrite de structure grenat caractérisé en ce qu'il répond à la formule chimique suivante :
$(Y_aTR_bBi_{b'}Fe_cAl_dIn_eCa_fCu_gSn_hV_iCo_jSi_kO_{12\pm\gamma})$ + x $(Li_2CO_3$ ou $Li_2O$ ou $LiF$ ou $LiCl)$ avec x, en % massique, compris entre 0,1 et 2 ;
avec TR : une terre rare ou une combinaison de terres rares ne comprenant pas l'élément Y ;
$-1 \leq \gamma \leq 1$ ;

$$3 (a+b+b'+c+d+e) + 2 (f+g+j) + 4 (h+k) + 5 i = 24 \pm 2\gamma ;$$

$0 \leq a \leq 2,5$ ;
$0 \leq b \leq 1,5$ ;
$0,5 \leq b' < 3$ ;
$4 \leq c \leq 5$ ;
$0 \leq d \leq 1,5$ ;
$0 \leq e \leq 0,8$ ;
$0 \leq f \leq 1$ ;
$0 < g \leq 0,05$ ;
$0 < h \leq 1$ ;
$0 \leq i \leq 0,05$ ;
$0 \leq j \leq 0,5$ ;
$0 \leq k \leq 0,5$

EP 4 177 233 A1

le matériau ayant une température de frittage inférieure ou égale à 920 °C.

L'invention a aussi pour objet un procédé de fabrication du matériau ferrite de l'invention.

# FIG. 4

(52) Classification Coopérative des Brevets (CPC): (Cont.)
C04B 2235/442; C04B 2235/444; C04B 2235/445; G02F 1/093; H01P 1/387

**Description**

Le domaine de l'invention est celui des circulateurs et des isolateurs hyperfréquence. Ces dispositifs non-réciproques sont utilisés dans le cas d'émission/réception simultanée ou en mode isolateurs, dans le but de protéger la source des désadaptations d'impédance.

Plus précisément, la présente invention concerne des nouveaux matériaux et leur réalisation pour intégration dans les circulateurs/isolateurs hyperfréquence.

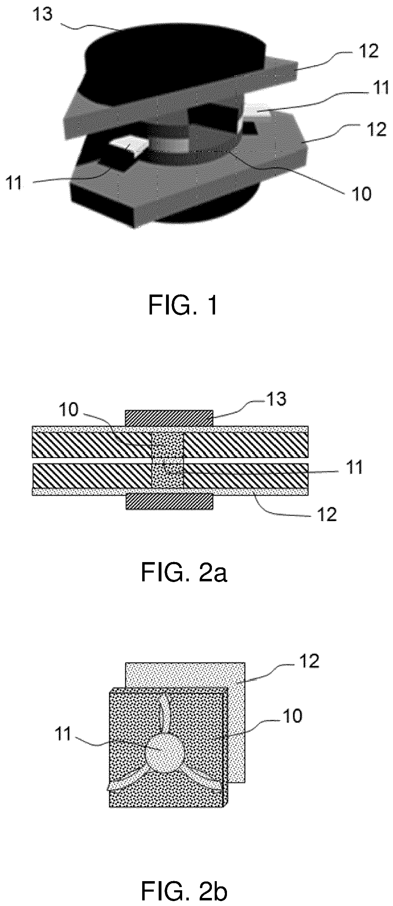

La figure 1 illustre le schéma d'un circulateur triplaque constitué de 4 principaux éléments :

- le ferrite 10, à l'origine de la non-réciprocité du circulateur sous l'effet d'un champ magnétique. Il peut avantageusement s'agir d'un grenat pour des applications entre 1 et 12 GHz ;
- les lignes conductrices 11, pouvant être en or ou en argent ;
- des plans de masse 12 ;
- l'aimant permanent 13.

Un enjeu lors de la réalisation de tels dispositifs, notamment utilisés dans les antennes électroniques à balayage actif, est la réduction de leur coût et de leur taille sans dégradation de leurs performances.

Pour cela, ces dispositifs peuvent avantageusement être réalisés par cofrittage. Cette technique permet :

- de réduire le nombre d'étapes lors de la réalisation des assemblages (en effet, les différents éléments constituant un circulateur sont assemblés avant un frittage global) et ainsi de simplifier la réalisation d'un circulateur en technologie triplaque ou ligne microruban « *microstrip* » ;
- de s'affranchir de l'utilisation de colle qui altère les performances des dispositifs ainsi que leur durée de vie.

Les figures 2a et 2b illustrent à cet effet des schémas respectivement des technologies triplaque et ligne microruban « *microstrip* ». La figure 2a met en évidence un aimant 13, un ferrite central 10 une Jonction Y 11 et un plan de masse 12. La figure 2b met en évidence un plan de masse 12, un ferrite 10 et une jonction Y 11.

Le processus de réalisation de ces dispositifs est long et coûteux et l'assemblage mécanique des différents éléments est complexe. Afin de simplifier ce processus, l'adaptation des différents matériaux à un procédé de cofrittage peut être une solution.

Dans le but de cofritter avec de l'or ou de l'argent, il est indispensable d'adapter le matériau central, le ferrite, responsable de l'effet non-réciproque du circulateur lorsqu'il est soumis à un champ magnétique.

Un matériau ferrite particulièrement bien adapté aux applications visées dans la présente invention et notamment pour des applications dans le domaine de fréquence [1GHz, 12GHz] est un grenat ferrimagnétique d'yttrium fer (YIG).

Les métaux envisagés pour la réalisation des pistes métalliques cofrittées étant généralement l'or et l'argent, les températures de fusion de ces métaux étant respectivement 1064 et 962 °C, il est donc primordial d'adapter la température de frittage du ferrite. Le grenat d'yttrium fer (YIG) présente une température de frittage élevée de 1450-1500°C. Il ne peut donc être envisagé de le coffriter avec de l'or ou de l'argent.

Des études publiées dans les demandes de brevet EP1829061A1, EP2622613A1, la thèse de L. Pinier (Nouveaux grenats ferrimagnétiques à basse température de frittage pour applications micro-ondes. Thèse de doctorat de l'Ecole Polytechnique, 2006) et la thèse de L. Qassym (Etude et mise au point de ferrites de structure grenat à basse température de frittage pour intégration dans les circulateurs hyperfréquences. Thèse de doctorat de l'Université Paris Saclay, 2017) ont montré qu'il est possible de fritter les ferrites grenats dérivés du YIG en dessous de leurs températures de frittage initiales. Plus précisément :

- le YIG substitué Cu présente une température de frittage abaissée à 1050°C;

- le YIG substitué Cu et Bi présente une température de frittage abaissée à 950°C;

- le YIG substitué Cu, Bi, V présente une température de frittage abaissée à 900°C.

Ces résultats sont résumés dans le tableau suivant :

| Substitution | Température de frittage (°C) | Publication | Compatibilité cofrittage | | Commentaire |
|---|---|---|---|---|---|
| | | | Au | Ag | |
| Grenat d'yttrium fer (YIG) | 1450 - 1500 | EP1829061A1 EP2622613A1 Th. L. Pinier | Non | Non | Température de frittage trop élevée |
| YIG substitué Cu | 1050 | | Non | Non | |
| YIG substitué Cu et Bi | 950 | | Oui | Non | |
| YIG substitué Cu, Bi et V | < 900 | Thèse L. Qassym | Oui | Non | Problème de compatibilité chimique |

Ces premiers résultats montrent que même avec des températures de frittage suffisamment éloignées de la température de fusion de l'argent, le cofrittage avec l'argent reste compliqué. Le document FR 3105217, divulguant les résultats d'une étude menée par le Demandeur, montre qu'il est possible d'obtenir des matériaux à basse température de frittage permettant un cofrittage avec de l'argent en utilisant comme fondant le carbonate de lithium. Sur la base de la formulation présentée ci-dessus, est ajouté, après calcination (phase grenat déjà formée), un carbonate ou un oxyde de lithium servant de fondant. Cet ajout permet de diminuer la température de frittage aux alentours de 900 °C et les tests de cofrittage montrent une compatibilité de ce matériau avec l'argent.

L'ajout de carbonate de lithium comme fondant permet donc d'abaisser la température de frittage.

Par ailleurs, pour certaines applications, comme des applications à plus hautes fréquences par exemple, il est nécessaire d'avoir des aimantations à saturation supérieures à 180 mT.

A partir de grenats classiques, une solution pour augmenter l'aimantation à saturation du YIG est la substitution des ions $Fe^{3+}$ situés en site octaédrique par des ions 4+, comme $Zr^{4+}$, $Ti^{4+}$ ou $Sn^{4+}$, divulguée dans les articles suivants :

- Article de G. Winkler, P. Hansen et P. Holts : Variation of the magnetic material parameters and lattice constants of polycristalline yttrium-iron garnet by incorporation of non-magnetic ions (1972) ;

- Article de Q. Xu et al., Effect of Sn-substitution on the microstructure and magnetic properties of Bi-CVG ferrite with low temperature sintering (2011);

- Article de Y. Machida, Y. Nakayama, H. Saji, T. Yamadaya, et M. Asuma, Magnetic Properties and Resonance Linewidths of Zr- and Ti-Substituted Ca-V Garnet, IEEE Transactions on Magnetics, September 1972.

Ces matériaux présentent une permittivité plus faible.

De plus, les températures de frittage présentées dans ces articles ne sont pas suffisamment basses : 1450 °C pour le premier, 1075 °C pour le second et 1270-1350°C pour le troisième. Ces matériaux avec substitution du fer par le zirconium, le titane et l'étain ne sont donc pas compatibles pour un cofrittage, ni avec de l'argent, ni avec de l'or. Ces solutions vont à l'encontre de l'objectif visé initialement d'avoir une température de frittage proche de 900°C.

Sur un principe similaire, le Demandeur a effectué des tests avec d'autres substitutions du fer par du titane et de l'hafnium. Les résultats n'ont pas été concluants. La température de frittage demeure trop élevée et incompatible d'un cofrittage avec l'argent.

Une autre solution pour obtenir des aimantations suffisamment élevées et des températures de frittage basses est la substitution de l'ion Fe3+ par l'ion Zr4+ associée à des substitutions bismuth/cuivre (référence : Thèse Lilia Qassym. Etude et mise au point de ferrites de structure grenat à basse température de frittage pour intégration dans les circulateurs hyperfréquences. Thèse de doctorat de l'Université Paris Saclay, 2017). On obtient alors un matériau avec Ms (aimantation à saturation) compris entre 180 et 200 mT frittant à 950 °C. Cette substitution apparaît comme la voie la plus prometteuse. Un tel matériau possède alors une aimantation à saturation suffisamment élevée. Par contre, sa température de frittage de 950 °C demeure trop élevée pour permettre un cofrittage avec de l'argent dont la température de fusion se situe à environ 960°C. Pour réaliser un coffritage avec de l'argent, on préconise de ne pas dépasser 930°C de façon à rester suffisamment loin de la température de fusion de l'argent. Deux voies de diminution de la température de frittage peuvent être poursuivies :

- l'utilisation de vanadium en substitution ; ou

- l'utilisation de carbonate de lithium comme fondant.

En raison de la haute affinité chimique de l'oxyde de vanadium et de l'oxyde d'argent à basse température, l'utilisation de vanadium pour cofrittage avec une métallisation argent a été proscrite. La solution restante est donc l'utilisation du carbonate de lithium sur le matériau substitué zirconium. Une étude a été menée mettant en évidence l'inefficacité de l'utilisation du carbonate de lithium : si son ajout comme fondant après le chamottage entraîne bien une densification suffisante à moins de 950 °C, il mène aussi à l'apparition de phase parasite perturbant les propriétés diélectriques (permittivité et pertes diélectriques) et magnétiques du matériau avec une importante diminution de l'aimantation à saturation.

En effet, sur la base des enseignements de l'art antérieur, un ajout de carbonate de lithium a été réalisé sur les compositions substituées zirconium qui remplissent le critère d'aimantation à saturation suffisamment élevée. Malheureusement, l'insertion du lithium dans la maille substituée zirconium n'est pas optimale et, si la masse volumique est suffisante à basse température de frittage (au moins 95% de densification à 900 °C), son insertion entraîne une augmentation non négligeable des pertes et surtout la diminution de l'aimantation à saturation.

Le tableau ci-dessous présente l'aimantation à saturation de deux matériaux (substitués zirconium à 0,3 et à 0,5) pour un ajout de 0, 0,64% et 1,28% en poids de carbonate de lithium. Il en ressort que plus on ajoute de carbonate de lithium, plus l'aimantation à saturation diminue.

| % massique $Li_2CO_3$ | Zr = 0,3 | Zr = 0,5 |
|---|---|---|
| 0 | 190 mT | 183 mT |
| 0,64 | 179 mT | 170 mT |
| 1,28 | 168 mT | 155 mT |

Ainsi, il a été démontré que l'on peut cofritter des nouveaux grenats substitués Bi-Cu avec de l'or mais aussi de l'argent, dans l'optique d'une réduction des coûts, grâce à l'utilisation de carbonate de lithium fondant. Mais ces nouveaux matériaux présentent une aimantation à saturation aux alentours de 170 mT. Or, il a été montré que pour des applications plus hautes fréquences (bande Ku par exemple), il est indispensable d'augmenter l'aimantation de nos grenats. Une solution issue d'études précédentes permet d'obtenir des aimantations à saturation supérieures à 180 mT mais ce matériau n'est pas compatible avec l'utilisation de carbonate de lithium comme fondant (bonne densification à basse température de frittage mais apparition de pertes et diminution de l'aimantation à saturation due à l'apparition de phases parasites).

En d'autres termes, des solutions connues de l'art antérieur permettent de diminuer la température de cofrittage du matériau. D'autres solutions connues permettent d'augmenter l'aimantation à saturation du matériau. Mais ces solutions ne sont pas compatibles entre elles. L'art antérieur connu n'offre donc pas de solution pour obtenir un matériau ferrite de structure grenat à basse température de frittage et haute aimantation à saturation pour cofrittage avec une métallisation argent ou or.

Dans ce contexte, le Demandeur propose une autre solution passant par un nouveau matériau ferrite comprenant du lithium et frittant à moins de 920 °C tout en présentant une aimantation à saturation supérieure à 180 mT. Ce nouveau matériau ferrite peut être obtenu avantageusement à partir de l'ajout sur de la poudre calcinée (ou chamottée) de ferrite dit « cru » avant frittage de sel de lithium comme fondant. La phase fondante, ayant une température de fusion peu élevée, permet d'aider au frittage.

Le sel de lithium utilisé peut avantageusement être par exemple du carbonate de lithium, sa température de fusion étant de 723 °C.

Plus précisément la présente invention a pour objet un matériau ferrite de structure grenat caractérisé en ce qu'il répond à la formule chimique suivante :

$$(Y_aTR_bBi_b,Fe_cAl_dIn_eCa_fCu_gSn_hV_iCo_jSi_kO_{12\pm\gamma}) + x\ (Li_2CO_3\ ou\ Li_2O\ ou\ LiF\ ou\ LiCl)$$

avec x, en % massique, compris entre 0,1 et 2 ;
avec TR : une terre rare ou une combinaison de terres rares ne comprenant pas l'élément Y ;
$-1 \leq \gamma \leq 1$ ;

$$3\,(a+b+b'+c+d+e) + 2\,(f+g+j) + 4\,(h+k) + 5\,i = 24 \pm 2\gamma$$

$0 \le a \le 2{,}5$ ;
$0 \le b \le 1{,}5$ ;
$0{,}5 < b' < 3$ ;
$4 \le c \le 5$ ;
$0 \le d \le 1{,}5$ ;
$0 \le e \le 0{,}8$ ;
$0 \le f \le 1$ ;
$0 < g \le 0{,}05$ ;
$0 < h \le 1$ ;
$0 \le i \le 0{,}05$ ;
$0 \le j \le 0{,}5$ ;
$0 \le k \le 0{,}5$,

le matériau ayant une température de frittage inférieure ou égale à 920 °C.

L'invention a aussi pour objet un composant ou dispositif comprenant le matériau ferrite selon l'invention et des métallisations avantageusement en argent. Le composant ou dispositif peut être un circulateur, un isolateur, un commutateur (switch en dénomination anglaise) ou un déphaseur.

L'invention a encore pour objet un procédé de fabrication d'un matériau ferrite selon l'invention, ledit procédé comprenant :

- la pesée de matières premières de type oxydes ou carbonates;
- un premier broyage desdites matières premières ;
- une étape de calcination (encore dénommée chamottage) desdites matières premières broyées à une température comprise entre 750°C et 850°C permettant d'obtenir une poudre de matériau ferrite cru ;
- un second broyage de ladite poudre de matériau ferrite cru ;
- l'ajout d'un fondant de sel de lithium pouvant être $Li_2CO_3$, $Li_2O$, LiF ou LiCl, à ladite poudre de matériau ferrite cru.

Le matériau ferrite résultant de la poudre de matériau ferrite cru et du fondant de sel de lithium peut avantageusement être fritté à une température comprise entre 850°C et 920°C.

Selon des variantes du procédé de l'invention, le matériau cru étant $Y_{2{,}03}Ca_{0{,}25}Bi_{0{,}67}CU_{0{,}05}Fe_{4{,}7}Sn_{0{,}3}O_{12}$, ou $Y_{1{,}98}Ca_{0{,}3}Bi_{0{,}67}CU_{0{,}05}Fe_{4{,}65}Sn_{0{,}30}O_{12-\gamma}$, on ajoute entre 0,2 et 0,75% massique de fondant de $Li_2CO_3$, la température de frittage sur l'ensemble résultant étant de l'ordre de 850°C à 920°C.

L'invention a encore pour objet un procédé de fabrication d'un composant ou dispositif comportant plusieurs éléments dont un matériau ferrite selon l'invention, caractérisé en ce que :

- on prépare ledit matériau ferrite selon le procédé de l'invention ;
- on réalise une opération de frittage durant laquelle on solidarise ledit ferrite à au moins un desdits autres éléments dudit composant ou dispositif, ou à un précurseur (métal or ou argent, diélectrique à basse température de frittage, ferrite à basse température de frittage ...) dudit élément par un procédé de cofrittage.

Dans le composant ou dispositif, l'un au moins des autres éléments est une couche de métal et avantageusement de l'argent.

L'invention sera mieux comprise et d'autres avantages apparaîtront à la lecture de la description qui va suivre donnée à titre non limitatif et grâce aux figures annexées parmi lesquelles :

[Fig 1] illustre le schéma d'un circulateur triplaque selon l'art connu ;

[Fig. 2a] illustre un circulateur triplaque selon l'art connu pouvant être réalisé par cofrittage ;

[Fig. 2b] illustre un circulateur ligne microruban « *microstrip* » selon l'art connu pouvant être réalisé par cofrittage ;

[Fig. 3] illustre des résultats de test pertes diélectriques et de permittivité d'un matériau ferrite de l'invention en fonction de la fréquence exprimée en Hertz ;

[Fig. 4] illustre des résultats de test de cofrittage d'un ferrite de l'invention avec un dépôt d'argent, après cofrittage à 900°C ;

[Fig. 5] représente un organigramme des étapes du procédé de fabrication d'un matériau ferrite selon l'invention.

De manière générale, le matériau ferrite de l'invention répond à la formule chimique suivante :

$$(Y_a TR_b Bi_{b'} Fe_c Al_d In_e Ca_f Cu_g Sn_h V_i Co_j Si_k O_{12\pm\gamma}) + x\ (Li_2CO_3\ ou\ Li_2O\ ou\ LiF\ ou\ LiCl)$$

avec x, en % massique, compris entre 0,1 et 2 ;
avec TR : une terre rare ou une combinaison de terres rares ne comprenant pas l'élément Y ;
$-1 \le \gamma \le 1$ ;

$$3\ (a+b+b'+c+d+e) + 2\ (f+g+j) + 4\ (h+k) + 5\ i = 24\pm2\gamma\ ;$$

$0 \le a \le 2,5$ ;
$0 \le b \le 1,5$ ;
$0,5 \le b' < 3$ ;
$4 \le c \le 5$ ;
$0 \le d \le 1,5$ ;
$0 \le e \le 0,8$ ;
$0 \le f \le 1$ ;
$0 < g \le 0,05$ ;
$0 < h \le 1$ ;
$0 \le i \le 0,05$ ;
$0 \le j \le 0,5$ ;
$0 \le k \le 0,5$
le matériau ayant une température de frittage inférieure ou égale à 920 °C.

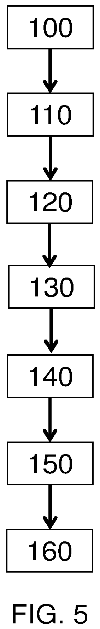

Par cette formule, il faut comprendre que l'on prend x (compris entre 0,1 et 2) grammes de $Li_2CO_3$ (ou $Li_2O$ ou LiF ou LiCl) pour 100g de ferrite de formulation $Y_a TR_b Bi_{b'} Fe_c Al_d In_e Ca_f Cu_g Sn_h V_i Co_j Si_k O_{12\pm\gamma}$.
Les terres rares peuvent être utilisées dans le but de modifier l'aimantation à saturation et d'améliorer la tenue en puissance.
L'utilisation d'une combinaison du cuivre et du bismuth permet de diminuer la température de frittage. La température peut être inférieure ou égale à 920 °C. Ainsi, en ayant une température de frittage inférieure ou égale à 920 °C, un cofrittage avec de l'argent est possible. En particulier, la combinaison du cuivre et du bismuth permet un coffritage avec de l'argent, même en présence d'une faible quantité de vanadium. Il est noté que le vanadium ayant un pourcentage molaire i tel que $0 \le i \le 0,05$ permet, en présence du cuivre et du bismuth, un coffritage avec de l'argent.
Le bismuth est utilisé dans le but d'augmenter la permittivité et d'abaisser la température de frittage.
Le calcium peut être utilisé pour contrebalancer les charges en excès dues à l'introduction de zirconium, d'étain ou de titane. Il peut permettre de stabiliser la maille dans le cas de l'utilisation d'un taux important de bismuth par exemple.
La substitution du fer par de l'aluminium peut permettre une réduction des largeurs de raie et une diminution de l'aimantation à saturation.
Préférentiellement, le sel de lithium ajouté a une proportion massique comprise entre 0,15 et 1,5%, et encore préférentiellement entre 0,15 et 1,2%, par exemple 0,75%. Cette proportion massique dépend du matériau ferrite. L'ajout de sel de lithium permet de diminuer la température de frittage. Toutefois, le lithium présent dans le matériau peut, au-delà d'une certaine quantité, générer une pollution du matériau. Les plages préférentielles et l'exemple de 0,75% cités permettent d'obtenir un bon compromis en termes de température de frittage et de propriétés du matériau obtenu.
Comme cela apparaitra clairement ci-dessous, la substitution du fer par l'étain permet d'adapter l'aimantation à saturation.
Les matériaux ferrites de la présente invention sont réalisés selon un procédé classique de synthèse céramique. Les différentes étapes, représentées par un organigramme à la figure 5, sont :

- la pesée des matières premières (étape 100) ;
- le broyage du mélange préalablement obtenu (étape 110) ;
- une étape de calcination (étape 120), encore appelée chamottage ayant pour but de synthétiser la phase grenat sous forme de poudre et obtenir une poudre de matériau ferrite dit cru ;

- une seconde étape de broyage (étape 130);
- l'introduction d'un ajout de fondant à base de lithium (étape 140): l'ajout de fondant a lieu sur la phase calcinée (phase grenat formée par traitement thermique). Il est ajouté à la phase calcinée grâce à un mélangeur (mélangeur à pales, attritor, jarre ...).

Après cet ajout de fondant, des étapes classiques de mise en forme (étape 150) et de frittage (étape 160) peuvent être réalisées. Le frittage à plus haute température de la poudre chamottée rebroyée a pour but de densifier la céramique tout en lui conférant la forme souhaitée.

Le premier et le second broyage sont avantageusement effectués en milieu humide.

Le frittage de la poudre rebroyée est avantageusement effectué sous air ou sous oxygène.

Les opérations de broyage sont avantageusement effectuées avec un broyeur à boulets et/ou par attrition.

Le procédé de fabrication d'un matériau ferrite selon l'invention peut éventuellement comporter une étape additionnelle de calcination. Cependant, on peut noter qu'avantageusement, le procédé de fabrication selon l'invention peut ne comprendre qu'une seule étape de calcination.

En effet, les matériaux de l'invention sont obtenus par un procédé classique de synthèse céramique. Mais le nombre d'étapes et donc la simplicité de la synthèse dépend du matériau. L'insertion d'oxyde de zirconium dans la structure grenat est compliquée et deux étapes de calcination sont nécessaires à l'obtention d'une phase pure. Quelques impuretés peuvent même subsister après ces deux calcinations et être responsables de pertes magnétiques et diélectriques. Dans le cas de l'utilisation d'oxyde d'étain dans le matériau de l'invention, en revanche, une seule calcination peut suffire à obtenir la phase totalement pure.

Les performances obtenues sont décrites ci-après dans le cadre d'exemples avec des matériaux ferrites substitués à l'étain comportant l'utilisation de carbonate de lithium comme fondant et avec des matériaux ferrites substitués à l'étain ne comprenant pas d'ajout de fondant à base de lithium.

Afin de mettre en évidence les effets de l'utilisation d'étain et de carbonate de lithium, différentes compositions ont été étudiées :

- Ferrite A : $Y_{2,03}Ca_{0,25}Bi_{0,67}CU_{0,05}Fe_{4,7}Sn_{0,3}O_{12}$
- Ferrite B : $Y_{2,03}Ca_{0,25}Bi_{0,67}CU_{0,05}Fe_{4,7}Sn_{0,3}O_{12}$ + 0,64% massique $Li_2CO_3$
- Ferrite C : $Y_{1,93}Ca_{0,35}Bi_{0,67}CU_{0,05}Fe_{4,6}Sn_{0,4}O_{12}$
- Ferrite D : $Y_{1,93}Ca_{0,35}Bi_{0,67}Cu_{0,05}Fe_{4,6}Sn_{0,4}O_{12}$ + 0,64% massique $Li_2CO_3$
- Ferrite E : $Y_{1,83}Ca_{0,45}Bi_{0,67}Cu_{0,05}Fe_{4,5}Sn_{0,5}O_{12}$
- Ferrite F : $Y_{1,83}Ca_{0,45}Bi_{0,67}Cu_{0,05}Fe_{4,5}Sn_{0,5}O_{12}$ + 0,64% massique $Li_2CO_3$

La première caractérisation est la vérification de la formation de la phase par diffraction des rayons X. Cette mesure confirme une bonne formation de la phase.

Dans un premier temps, les retraits des matériaux ont été observés pour un frittage à 900 °C. Afin d'avoir une masse volumique raisonnable, la valeur attendue de retrait est de 16-17%.

| Matériau | % de retrait | Masses volumiques (g/cm$^3$) |
|----------|-------------|------------------------------|
| Ferrite A | 0 | - |
| Ferrite B | 17,1 | 5,32 |
| Ferrite C | 0 | - |
| Ferrite D | 16,1 | 5,25 |
| Ferrite E | 0 | - |
| Ferrite F | 16,8 | 5,21 |

L'impact du carbonate de lithium sur la densification est clair : le retrait, inexistant en son absence, passe à plus de 16 % lorsque le carbonate de lithium est ajouté comme fondant sur la phase déjà formée. Le carbonate de lithium permet donc bien une amélioration de la densification. Reste à vérifier que l'aimantation à saturation n'est pas impactée comme dans le cas des substitutions du fer par le zirconium, le titane ou l'hafnium.

Les aimantations à saturation des matériaux substitués Sn et avec ajout de carbonate de lithium sont présentés dans le tableau ci-dessous.

| Matériau | Aimantation à saturation (mT) |
|---|---|
| Ferrite B | 192 |
| Ferrite D | 178 |
| Ferrite F | 169 |

Ces résultats montrent que le matériau ferrite B substitué à l'étain comportant l'utilisation de carbonate de lithium selon l'invention présente une aimantation à saturation supérieure à 190 mT.

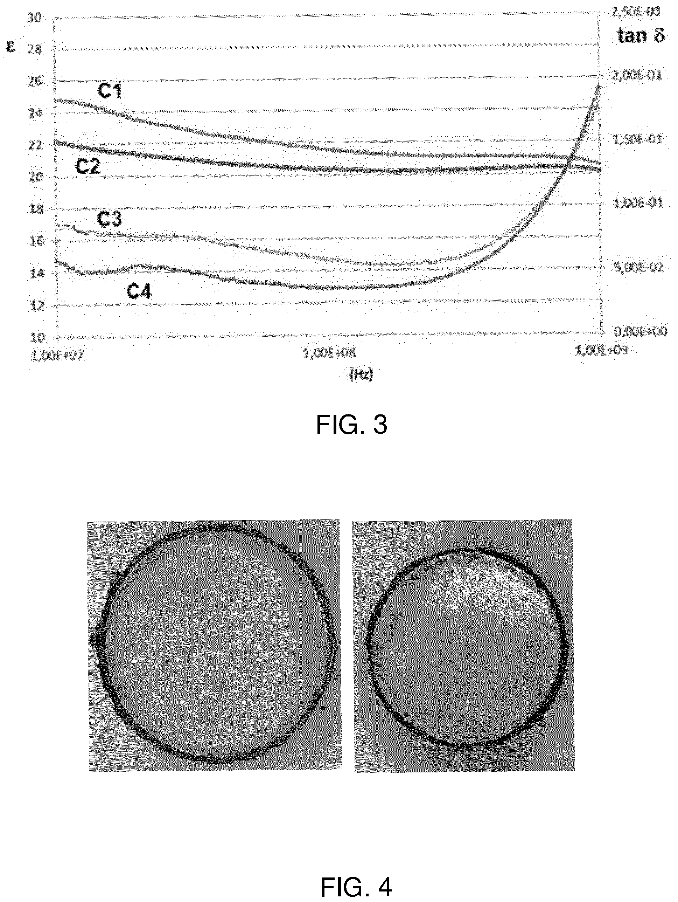

La figure 3 illustre des résultats de test des pertes diélectriques (tan δ) et de la permittivité (ε) d'un matériau ferrite de l'invention en fonction de la fréquence exprimée en Hertz. Les pertes diélectriques ont été mesurées. Les résultats sont présentés pour le matériau ferrite B, qui a une aimantation à saturation supérieure à 190 mT.

La courbe C1 représente la permittivité avec une température de frittage de 900 °C. La courbe C2 représente la permittivité avec une température de frittage de 900 °C et un recuit à 925 °C. La courbe C3 représente les pertes diélectriques avec une température de frittage de 900 °C. La courbe C4 représente les pertes diélectriques avec une température de frittage de 900 °C et un recuit à 925 °C. On voit que la permittivité reste élevée, aux alentours de 21 et les pertes sont en revanche un peu élevées à basse fréquence (tan δ de l'ordre de $5.10^{-2}$). Un second recuit a donc été réalisé, il permet une diminution de la relaxation : la permittivité reste la même, mais les pertes diminuent (tan δ de l'ordre de $3.10^{-2}$).

Les pertes diélectriques ont aussi été mesurées à 9,2 GHz (mesure en guide d'onde). Les résultats sont les suivants : ε = 21 et tan δ = $7.10^{-4}$.

Ces valeurs sont tout à fait satisfaisantes pour l'application : la permittivité reste élevée pour un grenat et les pertes sont très faibles.

La figure 4 illustre des résultats de test de cofrittage d'un ferrite de l'invention avec un dépôt d'argent, après cofrittage à 900°C. Des tests de cofrittage confirment la compatibilité du matériau selon l'invention avec l'argent. Une couche d'argent a été déposée grâce à un écran de sérigraphie puis l'ensemble a été cofritté à 900 °C. Les images présentées à la figure 4 présentent les résultats obtenus.

Ces essais de cofrittage sont tout à fait concluants. En effet, après frittage de la pastille de ferrite et de la métallisation à 900 °C, la qualité de la couche d'argent n'est pas altérée et on n'observe pas de diffusion.

L'application directe de la présente invention est la réalisation de circulateurs et isolateurs en technologie LTCC (Low Temperature Cofired Ceramics) ou autre technologie additive. La présente invention permet de simplifier des assemblages complexes grâce au cofrittage : le nombre d'étapes de réalisation est réduit. De plus, il est possible de s'affranchir de l'utilisation de colles qui dégradent les propriétés et qui en font une technologie moins durable.

Il est rappelé par ailleurs qu'il n'était pas possible, jusqu'à présent, de cofritter un ferrite de structure grenat à haute aimantation à saturation (pour des applications dans des circulateurs en bande Ku par exemple) avec de l'argent (problème de température de frittage ou de compatibilité avec l'argent). La présente invention permet de cofritter de l'argent avec un ferrite de structure grenat ayant une aimantation à saturation supérieure à 180 mT. Le coffritage avec l'argent est permis grâce à la présence du cuivre et du bismuth qui permettent de baisser la température de frittage à des températures inférieures ou égales à 920 °C.

Ainsi, l'invention repose sur la substitution des ions fer de la phase grenat par des ions étain combinée à l'utilisation de carbonate de lithium ou d'oxyde de lithium comme fondant. Alors que les substitutions connues de l'art antérieur indiquaient que l'augmentation de l'aimantation à saturation se fait au détriment de la température de frittage, et inversement, les deux caractéristiques combinées entre elles selon l'invention permettent d'obtenir un ferrite de structure grenat compatible pour un cofrittage avec de l'argent et possédant une aimantation à saturation suffisamment élevée.

## Revendications

1. Matériau ferrite de structure grenat **caractérisé en ce qu'**il répond à la formule chimique suivante :

$$(Y_a TR_b Bi_{b'} Fe_c Al_d In_e Ca_f Cu_g Sn_h V_i Co_j Si_k O_{12\pm\gamma}) + x \ (Li_2CO_3 \ ou \ Li_2O \ ou \ LiF \ ou \ LiCl)$$

avec x, en % massique, compris entre 0,1 et 2 ;
avec TR : une terre rare ou une combinaison de terres rares ne comprenant pas l'élément Y ;
$-1 \leq \gamma \leq 1$ ;

$$3\ (a+b+b'+c+d+e) + 2\ (f+g+j) + 4\ (h+k) + 5\ i = 24\pm2\gamma\ ;$$

$0 \leq a \leq 2,5$ ;
$0 \leq b \leq 1,5$ ;
$0,5 \leq b' < 3$ ;
$4 \leq c \leq 5$ ;
$0 \leq d \leq 1,5$ ;
$0 \leq e \leq 0,8$ ;
$0 \leq f \leq 1$;
$0 < g \leq 0,05$ ;
$0 < h \leq 1$ ;
$0 \leq i \leq 0,05$ ;
$0 \leq j \leq 0,5$ ;
$0 \leq k \leq 0,5$,

le matériau ayant une température de frittage inférieure ou égale à 920 °C.

2. Dispositif comprenant le matériau ferrite selon la revendication 1 et des métallisations, les métallisations étant préférentiellement en argent.

3. Circulateur comprenant le matériau ferrite selon la revendication 1 et des métallisations, les métallisations étant préférentiellement en argent.

4. Isolateur comprenant le matériau ferrite selon la revendication 1 et des métallisations, les métallisations étant préférentiellement en argent.

5. Procédé de fabrication d'un matériau ferrite selon la revendication 1, ledit procédé comprenant :

   - une étape de pesée (étape 100) de matières premières de type oxydes ou carbonates;
   - un premier broyage (étape 110) desdites matières premières ;
   - une étape de calcination (étape 120) desdites matières premières broyées à une température comprise entre 750°C et 800°C permettant d'obtenir le matériau ferrite cru ;
   - un second broyage (étape 130) de ladite poudre de matériau ferrite cru ;
   - une étape d'ajout (étape 140) d'un fondant de sel de lithium parmi $Li_2CO_3$, $Li_2O$, LiF ou LiCl, à ladite poudre de matériau ferrite cru.

6. Procédé de fabrication d'un matériau ferrite selon la revendication 5, dans lequel :

   - le matériau ferrite cru étant $Y_{2,03}Ca_{0,25}Bi_{0,67}CU_{0,05}Fe_{4,7}Sn_{0,3}O_{12}$ ou $Y_{1,98}Ca_{0,3}Bi_{0,67}CU_{0,05}Fe_{4,65}Sn_{0,30}O_{12-\gamma}$ ;
   - on ajoute entre 0,2 et 0,75% massique de fondant de $Li_2CO_3$.

7. Procédé de fabrication d'un dispositif comportant plusieurs éléments dont un matériau ferrite selon la revendication 1, **caractérisé en ce que** :

   - on prépare ledit matériau ferrite par le procédé selon l'une des revendications 5 ou 6;
   - on réalise une opération de frittage durant laquelle on solidarise ledit matériau ferrite à au moins un desdits autres éléments dudit dispositif, ou à un précurseur dudit élément par un procédé de cofrittage.

8. Procédé de fabrication d'un dispositif, selon la revendication 7, **caractérisé en ce que** l'un au moins des autres éléments est une couche de métal.

9. Procédé de fabrication d'un dispositif, selon la revendication 8, **caractérisé en ce que** le métal est de l'argent.

FIG. 1

FIG. 2a

FIG. 2b

FIG. 3

FIG. 4

```
┌─────────┐
│   100   │
└─────────┘
     │
     ▼
┌─────────┐
│   110   │
└─────────┘
     │
     ▼
┌─────────┐
│   120   │
└─────────┘
     │
     ▼
┌─────────┐
│   130   │
└─────────┘
     │
     ▼
┌─────────┐
│   140   │
└─────────┘
     │
     ▼
┌─────────┐
│   150   │
└─────────┘
     │
     ▼
┌─────────┐
│   160   │
└─────────┘
```

FIG. 5

**Europäisches Patentamt**
**European Patent Office**
**Office européen des brevets**

## RAPPORT DE RECHERCHE EUROPEENNE

Numéro de la demande

EP 22 20 6021

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | FR 3 105 217 A1 (THALES SA [FR]) 25 juin 2021 (2021-06-25) * alinéa [0047] – alinéa [0049]; alinéa [0053], alinéa [0054], [0048], alinéa [0067], la figure 4, revendications) * ----- | 1-9 | INV. C04B35/26 C04B35/626 C04B35/64 G02F1/09 H01F1/34 |
| Y | QI-MING XU ET AL: "Effects of Sn-substitution on the microstruction and magnetic properties of Bi-CVG ferrite with low temperature sintering", JOURNAL OF ALLOYS AND COMPOUNDS, ELSEVIER SEQUOIA, LAUSANNE, CH, vol. 509, no. 13, 19 janvier 2011 (2011-01-19), pages 4617-4621, XP028186141, ISSN: 0925-8388, DOI: 10.1016/J.JALLCOM.2011.01.129 [extrait le 2011-01-28] * abrégé; "2.Experimental"; "3.3 Magnetic Properties"; figure 5; "4. Conclusion" * ----- | 1-9 | H01P1/218 C01G49/00 |
| Y | YANG YAN ET AL: "Thermomagnetization characteristics and ferromagnetic resonance linewidth broadening mechanism for Ca-Sn Co-substituted YIG ferrites", CERAMICS INTERNATIONAL, ELSEVIER, AMSTERDAM, NL, vol. 44, no. 10, 29 mars 2018 (2018-03-29), pages 11718-11723, XP085384724, ISSN: 0272-8842, DOI: 10.1016/J.CERAMINT.2018.03.249 * "2 Experiment procedures"; figure 4; "4. Conclusions" * ----- -/-- | 1-9 | |

**DOMAINES TECHNIQUES RECHERCHES (IPC)**

C04B
H01P
G02F
H01F
C01G

Le présent rapport a été établi pour toutes les revendications

| Lieu de la recherche | Date d'achèvement de la recherche | Examinateur |
|---|---|---|
| Munich | 20 mars 2023 | Munro, Brian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............
& : membre de la même famille, document correspondant

EPO FORM 1503 03.82 (P04C02)

page 1 de 2

**Europäisches Patentamt**
**European Patent Office**
**Office européen des brevets**

# RAPPORT DE RECHERCHE EUROPEENNE

Numéro de la demande

EP 22 20 6021

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Qassym Lilia ET AL: "Etude et mise au point de ferrites de structure grenat à basse température de frittage pour intégration dans les circulateurs hyperfréquences", , 6 décembre 2017 (2017-12-06), XP055961741, Extrait de l'Internet: URL:https://www.theses.fr/2017SACLS479.pdf [extrait le 2022-09-16] * le document en entier * ----- | 1-9 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 20 mars 2023 | Munro, Brian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 22 20 6021

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2023

| Document brevet cité au rapport de recherche | Date de publication | Membre(s) de la famille de brevet(s) | Date de publication |
|---|---|---|---|
| FR 3105217 A1 | 25-06-2021 | EP 3838865 A1<br>FR 3105217 A1 | 23-06-2021<br>25-06-2021 |

Pour tout renseignement concernant cette annexe : voir Journal Officiel de l'Office européen des brevets, No.12/82

EPO FORM P0460

## RÉFÉRENCES CITÉES DANS LA DESCRIPTION

**Documents brevets cités dans la description**

- EP 1829061 A1
- EP 2622613 A1

- FR 3105217

**Littérature non-brevet citée dans la description**

- Nouveaux grenats ferrimagnétiques à basse température de frittage pour applications micro-ondes. **L. PINIER.** Thèse de doctorat. Ecole Polytechnique, 2006
- Etude et mise au point de ferrites de structure grenat à basse température de frittage pour intégration dans les circulateurs hyperfréquences. **L. QASSYM.** Thèse de doctorat. Université Paris Saclay, 2017

- **G. WINKLER ; P. HANSEN ; P. HOLTS.** *Variation of the magnetic material parameters and lattice constants of polycrystalline yttrium-iron garnet by incorporation of non-magnetic ions,* 1972
- **Q. XU et al.** *Effect of Sn-substitution on the microstructure and magnetic properties of Bi-CVG ferrite with low temperature sintering,* 2011
- **Y. MACHIDA ; Y. NAKAYAMA ; H. SAJI ; T. YAMADAYA ; M. ASUMA.** Magnetic Properties and Resonance Linewidths of Zr- and Ti-Substituted Ca-V Garnet. *IEEE Transactions on Magnetics,* Septembre 1972